# EUROPÄISCHE PATENTANMELDUNG

(11) **EP 0 785 654 A2**
(43) Veröffentlichungstag der Anmeldung: **23.07.1997**
(21) Anmeldenummer: 96120346.0
(22) Anmeldetag: 18.12.1996
(51) Int. Cl.: H04L 25/02

(54) **Schaltungsanordnung zum Aussenden von Signalen auf eine Leitung**

(30) Priorität: 19.01.1996 DE 19601824
(71) Anmelder: Hagenuk Telecom GmbH, 24118 Kiel (DE)
(72) Erfinder: Schönke, Herbert, 24589 Schülp/Nortorf (DE)
(74) Vertreter: Hansmann, Dierk, Dipl.-Ing.

(57) **Zusammenfassung**

Es wird eine Schaltungsanordnung zum Aussenden von Signalen, insbesondere Datensignalen, auf eine Leitung beschrieben, deren Amplitude bei Unterschreitung eines vorbestimmten Leitungswiderstandes (Abschlußwiderstand) stark abfällt und die einfach und kostengünstig zu realisieren ist. Die Schaltungsanordnung zeichnet sich dadurch aus, daß ein Ausgangsübertrager vorgesehen ist, an dessen Sekundärwicklung die Leitung angeschlossen ist und dessen Primärwicklung bei Beaufschlagung mit einem auszusendenden Signal in Abhängigkeit von einer von der Sekundärwicklung eingeprägten ersten, hohen oder einer zweiten, niedrigen Impedanz von einer Spannungsquelle mit einem niedrigen bzw. hohen Innenwiderstand gespeist wird.

## Beschreibung

Die Erfindung betrifft eine Schaltungsanordnung zum Aussenden von Signalen, insbesondere Datensignalen, auf eine Leitung mit veränderlicher Impedanz, wobei die Amplituden der Signale in Abhängigkeit von der Leitungsimpedanz in vorbestimmter Weise verändert werden.

Eine solche Schaltungsanordnung dient vorzugsweise zum Aussenden von rechteckförmigen, gleichstromfreien Datensignalen, wie sie z.B. in der CCITT-Empfehlung I.430 beschrieben sind.

Bei diesen Anwendungsfällen kann die Signalleitung von mehreren Teilnehmern gleichzeitig benutzt werden, so daß jede einzelne Schaltungsanordnung (Sendeschaltung) an veränderlichen Abschlußwiderständen betreibbar sein muß. Die Sendeschaltung muß also bei Abschluß mit unterschiedlichen Impedanzen ein definiertes Verhalten aufweisen. Dieses Verhalten ist in Form von Toleranzschemen festgelegt. Ferner darf die Schaltung im ausgeschalteten Zustand den Betrieb der angeschlossenen Schaltung nicht beeinträchtigen.

Bezüglich der Toleranzschemen muß die Sendeschaltung in Abhängigkeit von den Leitungsimpedanzen folgende Eigenschaften aufweisen:

Bei einer Änderung des Abschlußwiderstandes von 50 auf 400 darf sich die Amplitude nur begrenzt ändern, d.h. die Sendeschaltung muß als Spannungsquelle mit niedrigem Innenwiderstand arbeiten. Bei einem Abschluß mit einem Widerstand von z.B. 5,6 muß die Amplitude jedoch stark abfallen, d.h. der Innenwiderstand der Schaltung muß sich erhöhen.

Schaltungen dieser Art werden heute ausschließlich als integrierte MOS-Schaltkreise realisiert. Die Sendeschaltung befindet sich zusammen mit der Schaltung für die digitale Aufbereitung des Sendesignals in einem Gehäuse. Dieses Konzept hat jedoch folgende Nachteile:

Zur Erfüllung der oben genannten Forderungen sind aufwendige Analogschaltungen erforderlich. Wegen der benötigten Treiberleistung werden großflächige Transistorstrukturen gebraucht. Die gemeinsame Realisierung von Digitalteil und Sender-Endstufe in einem IC erfordert einen hohen Prozeßaufwand.

Die geforderte Hochohmigkeit der Schaltung im ungespeisten Zustand ist mit üblichen IC-Prozessen nicht zu gewährleisten. Auch hierfür muß besonderer Technologieaufwand betrieben werden.

Die Sender-Endstufe erzeugt ferner eine beträchtliche Verlustleistung und führt damit zur Erwärmung des IC-Gehäuses. Außerdem ist für ein gemischt analog/digitales IC ein hoher Testaufwand erforderlich. Aus diesem Grund sind die auf dem Markt erhältlichen Schaltkreise relativ teuer.

In der EP-0.705.008 wird ein Datensender zum Betreiben an einer Telekommunikationsleitung beschrieben. Dieser Datensender stellt einen Spannungssignal-Leitungstreiber dar, der eine Schaltung zum Erfassen eines Abschlußwiderstandes der Telekommunikationsleitung aufweist. Diese Schaltung ist so ausgelegt, daß sie während des Betriebes des Datensenders den Ausgangsstrom des Leitungstreibers mißt und mit einem Bezugswert vergleicht. Da die Stabilität eines Spannungssignal-Leitungstreibers von seiner offenen Schleifenverstärkung und dem Phasenverlauf über der Frequenz, d.h. seiner Frequenzantwort abhängt, wird diese in Abhängigkeit von dem gemessenen Ausgangsstrom so geändert, daß die Schaltung bei kleinem oder fehlendem Abschlußwiderstand nicht instabil arbeitet oder sogar schwingt.

Die oben genannte CCITT-Empfehlung schreibt jedoch in Abhängigkeit von dem Abschlußwiderstand der Leitung bestimmte Amplituden und Formen der Datensignale vor, die mit einer solchen Schaltung nicht sicher einzuhalten sind. Ferner ist die Sensorelektronik insbesondere bei integrierten Datensendern, bei denen diese Problematik noch verschärft auftritt, sehr aufwendig und somit kostenintensiv.

Der Erfindung lag deshalb die Aufgabe zugrunde, eine unter Vermeidung der oben genannten Nachteile einfache und kostengünstig zu realisierende Schaltungsanordnung zum Aussenden von Signalen, insbesondere Datensignalen, auf eine Leitung mit veränderlicher Impedanz zu schaffen, bei der die Amplituden der Signale in Abhängigkeit von der Leitungsimpedanz in vorbestimmter Weise verändert werden.

Gelöst wird diese Aufgabe mit der eingangs genannten Schaltungsanordnung dadurch, daß ein Ausgangsübertrager vorgesehen ist, an dessen Sekundärwicklung die Leitung angeschlossen ist und dessen Primärwicklung bei Beaufschlagung mit einem auszusendenden Signal in Abhängigkeit von einer von der Sekundärwicklung eingeprägten ersten, hohen oder einer zweiten, niedrigen Impedanz von einer Spannungsquelle mit einem niedrigen bzw. einem hohen Innenwiderstand gespeist wird.

Diese Lösung hat mehrere Vorteile. Einerseits kann die Ansteuerung der Sender-Endstufe in unkomplizierter Weise durch eine integrierte Digitalschaltung erfolgen. Der nicht integrierte Teil der Sender-Endstufe besteht aus einfachen Standard-Bauelementen, so daß die Lösung kostengünstig zu realisieren ist.

Andererseits enthält die Schaltung keine invertierenden Stufen, so daß sie sich stabil verhält und nicht mit den Design-Risiken von komplett integrierten Sendestufen behaftet ist.

Vorteilhafte Ausführungsformen der Erfindung sind in den Unteransprüchen beschrieben.

Danach kann die Spannungsquelle mit niedrigem Innenwiderstand durch einen als Spannungsfolger etriebenen ersten Transistor gebildet sein.

Ferner kann die Spanungsquelle mit hohem Innenwiderstand durch einen Kollektor-Serienwiderstand (R7) des Transistors gebildet sein, der dann die Impedanz bestimmt, wenn der Transistor durch niederohmigen Abschluß bis zur Sättigung durchgesteuert wird.

Der Emitteranschluß des ersten Transistors ist vorzugsweise mit der Primärwicklung des Ausgangsübertragers verbunden. Die Basis wird über einen Widerstandsteiler mit einem Teilbetrag der Versorgungsspannung angesteuert.

Weiterhin kann ein erster Schaltransistor zur Erzeugung des auszusendenden Signals eingesetzt werden, dessen Schaltausgang mit einem ersten Ende der Primärwicklung des Ausgangsübertragers verbunden ist.

Der erste Schalttransistor kann zur Erzeugung eines Sendeimpulses mit einer ersten Polarität vorgesehen sein, während ein zweiter Schalttransistor zur Erzeugung eines Sendeimpulses mit einer zweiten, dazu entgegengesetzten Polarität vorgesehen ist, wobei der Schaltausgang des zweiten Schaltransistors mit einem zweiten Ende der Primärwicklung des Ausgangsübertragers verbunden ist.

Für die Aussendung von Impulsen der umgekehrten Polarität weist die Schaltung einen zweiten Transistor sowie einen zweiten Widerstands-Spannungsteiler auf, die in gleicher Weise wie der erste Transistor und der erste Widerstands-Spannungsteiler geschaltet sind, wobei der Emitteranschluß des ersten Transistors mit dem zweiten Ende der Primärwicklung und der Emitteranschluß des zweiten Transistors mit dem ersten Ende der Primärwicklung des Ausgangsübertragers verbunden ist.

Alternativ dazu kann die Primärwicklung des Ausgangsübertragers aus zwei Wicklungshälften gebildet sein, wobei der Mittelabgriff mit dem Emitteranschluß des ersten Transistors verbunden ist.

Dabei kann zwischen dem Emitter und dem Mittelabgriff ein als Diode geschalteter dritter Transistor zur Isolierung der Schaltungsanordnung im inaktiven Zustand liegen.

Weitere Einzelheiten, Merkmale und Vorteile ergeben sich aus der nachfolgenden Beschreibung von zwei bevorzugten Ausührungsformen anhand der Zeichnung. Es zeigt:
- Figur 1: ein Schaltbild einer ersten Ausführungsform der Erfindung; und
- Figur 2: ein Schaltbild einer zweiten Ausführungsform der Erfindung.

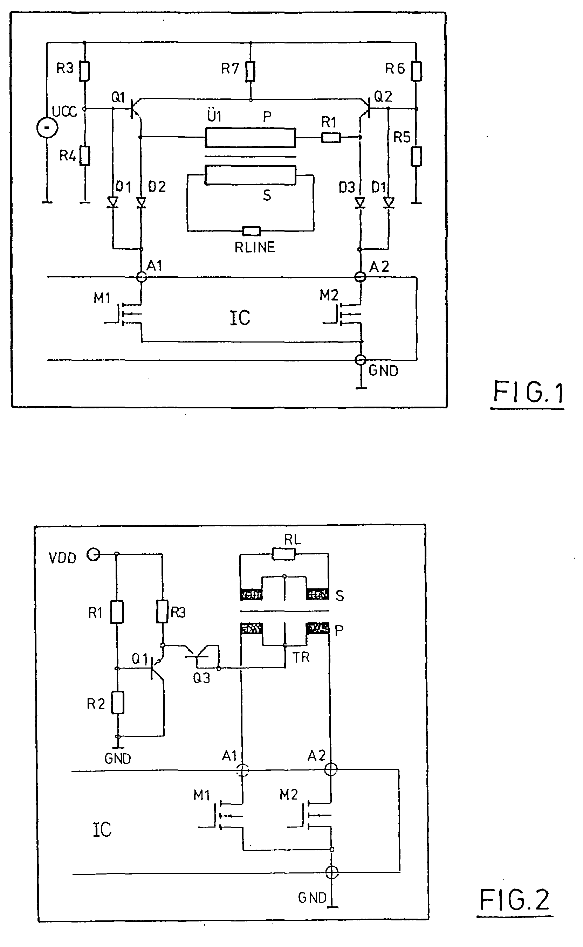

Die in Figur 1 dargestellte Schaltungsanordnung der ersten Ausführungsform der Erfindung zeigt in ihrem unteren Teil einen Ausschnitt einer integrierten Schaltung (IC) zur Erzeugung von über eine Leitung auszusendenden Impulsen. Den Ausgang dieser Logikschaltung bildet ein erster MOS-Schalttransistor M2 und ein zweiter MOS-Schalttransistor M1, die niemals gleichzeitig durchschalten, sondern alternativ zur Erzeugung von Ausgangsimpulsen mit zueinander entgegengesetzter Polarität dienen.

Oberhalb der integrierten Schaltung ist die Sendeschaltung dargestellt, die bei sich ändernden Leitungsimpedanzen das oben erläuterte Verhalten zeigen muß. Die Sendeschaltung weist einen ersten und einen zweiten NPN-Kleinsignaltransistor Q1, Q2, sowie 4 Dioden, 6 Widerstände und einen Ausgangsübertrager Ü1 mit einer Primärwicklung P und einer Sekundärwicklung S auf, wobei letztere an die Signalleitung R_{Line} angeschlossen ist.

Die Schaltung arbeitet wie folgt: Solange der erste Schalttransistor M2 und der zweite Schalttransistor M1 stromlos sind, sind auch der erste Transistor Q1 und der zweite Transistor Q2 stromlos, so daß kein Ausgangsimpuls an dem Ausgangsübertrager Ü1 anliegt.

Sofern der zweite Schalttransistor M1 durchschaltet, wird der erste Transistor Q1 durch eine Diode D1 an der Basis von Q1 gesperrt. Eine Diode D2 am Emitter von Q1 leitet und zieht ein (zweites) Ende der Primärwicklung P nach Minus. Der Emitter des zweiten Transistors Q2 bleibt niederohmig auf einem mit einem zweiten Basisspannungsteiler R6/R5 einstellbaren Spannungsniveau. Die Primärwicklung P des Ausgangsübertragers Ü1 erhält somit eine feste Eingangsspannung aus einer Impedanz R1. Dieser Fall gilt dann, wenn der Abschlußwiderstand größer als 50 Ohm ist.

Wenn der Abschlußwiderstand R_{Line} wesentlich kleiner wird (z.B. 5,6 Ohm), so wird diese niedrige Impedanz auf die Primärwicklung P des Ausgangsübertragers Ü1 übertragen. Der erhöhte Strom durch den zweiten Transistor Q2 führt dazu, daß er in die Sättigung getrieben wird. Der Einsatzpunkt für die Sättigung wird durch den Wert eines Kollektorwiderstandes R7 bestimmt. Im gesättigten Zustand stellt der zweite Transistor Q2 keine niederohmige Spannungsquelle mehr dar. Stattdessen liegt ein Parallel-Widerstand R7/R6/R5 in Reihe mit dem Primärwiderstand R1. Mit diesem Verhalten erfüllt die Schaltungsanordnung genau die eingangs beschriebenen Impedanz-Vorgaben.

Beim Durchschalten des ersten Schalttransistors M2 entsteht in gleicher Weise ein Impuls mit entgegengesetzter Polarität. In diesem Fall wird der zweite Transistor Q2 durch die Diode D4 gesperrt, während die Diode D3 leitet und die rechte Seite (erstes Ende) der Primärwicklung P nach Minus zieht. Der Emitter des ersten Transistors Q1 bleibt niederohmig auf einem mit dem ersten Basisspannungsteiler R3/R4 einstellbaren Spannungsniveau. Die Primärseite P des Ausgangsübertragers Ü erhält somit wieder eine feste Eingangsspannung bei hochohmigem Leitungsabschluß.

Wenn der Abschlußwiderstand R_{Line} niederohmig wird (z.B. 5,6 Ohm), wird diese niedrige Impedanz wieder auf die Primärwicklung P des Ausgangsübertragers Ü1 übertragen. Der erhöhte Strom durch den ersten Transistor Q1 führt nun dazu, daß er in die Sättigung getrieben wird. Der Einsatzpunkt für die Sättigung wird durch den Wert eines Kollektorwiderstandes R7 bestimmt. Im gesättigten Zustand stellt der erste Transistor Q1 keine niederohmige Spannungsquelle mehr dar. Stattdessen liegt ein erster Widerstands-Spannungsteiler R7/R3/R4 an der Primärwicklung P des Ausgangsübertragers.

Figur 2 zeigt eine Schaltungsanordnung gemäß einer zweiten Ausführungsform der Erfindung. Im unteren Abschnitt ist wiederum ein Teil einer integrierten Schaltung (IC) zur Erzeugung von über eine Leitung auszusendenden Impulsen dargestellt. Den Ausgang dieser Logikschaltung bildet ein erster MOS-Schalttransistor M2 und ein zweiter MOS-Schalttransistor M1, die niemals gleichzeitig durchschalten, sondern alternativ zur Erzeugung von Ausgangsimpulsen mit zueinander entgegengesetzter Polarität dienen.

Oberhalb der integrierten Schaltung ist wieder die Sendeschaltung dargestellt, die bei sich ändernden Leitungsimpedanzen das oben erläuterte Verhalten zeigen muß. Die Sendeschaltung weist einen PNP-Kleinsignaltransistor Q1, sowie 3 Widerstände und einen Ausgangsübertrager TR mit einer Primärwicklung P und einer Sekundärwicklung S auf, wobei letztere an die Signalleitung R_{Line} angeschlossen ist. Die Primär- und die Sekundärwicklungen bestehen jeweils aus zwei Wicklungshälften. Der Mittelabgriff der Primärwicklung ist über einen als Diode geschalteten Transistor Q3 mit dem Emitter des Transistors Q1 verbunden.

Die Schaltung arbeitet wie folgt: Bei großem Abschlußwiderstand R_{Line}, der einen geringen Strom durch die Primärwicklung P zur Folge hat, stellt der Emitter des Transistors Q1 eine niederohmige Spannungsquelle dar. Bei kleinem Abschlußwiderstand R_{Line}, der einen großen Strom durch die Primärwicklung zur Folge hat, wird der Transistor Q1 hingegen stromlos, wobei der Strom durch die Primärwicklung P durch den Widerstand R3 begrenzt wird. Auch diese Schaltungsanordnung besitzt die gewünschte nichtlineare Generatorimpedanz.

Der als Diode geschaltete Transistor Q3 kompensiert den Temperaturgang des Transistors Q1 und isoliert die Schaltungsanordnung im inaktiven Zustand.

## Patentansprüche

1. Schaltungsanordnung zum Aussenden von Signalen, insbesondere Datensignalen, auf eine Leitung mit veränderlicher Impedanz, wobei die Amplituden der Signale in Abhängigkeit von der Leitungsimpedanz in vorbestimmter Weise verändert werden, dadurch gekennzeichnet, daß ein Ausgangsübertrager (Ü1; TR) vorgesehen ist, an dessen Sekundärwicklung (S) die Leitung angeschlossen ist und dessen Primärwicklung (P) bei Beaufschlagung mit einem auszusendenden Signal in Abhängigkeit von einer von der Sekundärwicklung eingeprägten ersten, hohen oder einer zweiten, niedrigen Impedanz von einer Spannungsquelle mit einem niedrigen bzw. hohen Innenwiderstand gespeist wird.

2. Schaltungsanordnung nach Anspruch 1, dadurch gekennzeichnet, daß die Spannungsquelle mit niedrigem Innenwiderstand durch einen im linearen Bereich betriebenen ersten Transistor (Q1) gebildet ist.

3. Schaltungsanordnung nach Anspruch 1 oder 2, dadurch gekennzeichnet, daß die Spanungsquelle mit hohem Innenwiderstand durch einen ersten Widerstands-Spannungsteiler (R7, R3, R4; R1, R2) gebildet ist.

4. Schaltungsanordnung nach Anspruch 3, dadurch gekennzeichnet, daß der erste Transistor (Q1) durch einen durch die zweite, niedrige Impedanz fließenden hohen Strom in die Sättigung getrieben und dadurch der erste Widerstands-Spannungsteiler (R7, R3, R4; R1, R2) mit der Primärwicklung des Ausgangsübertragers verbunden wird.

5. Schaltungsanordnung nach Anspruch 3 oder 4, dadurch gekennzeichnet, daß der Emitteranschluß des ersten Transistors (Q1) mit der Primärwicklung des Ausgangsübertragers verbunden ist und der erste Widerstands-Spannungsteiler durch einen Kollektorwiderstand (R7) und einen Basisspannungsteiler (R3, R4; R1, R2) gebildet ist.

6. Schaltungsanordnung nach einem der vorhergehenden Ansprüche, gekennzeichnet durch einen ersten Schaltransistor (M2) zur Erzeugung des auszusendenden Signals, dessen Schaltausgang mit einem ersten Ende der Primärwicklung des Ausgangsübertragers verbunden ist.

7. Schaltungsanordnung nach einem der vorhergehenden Ansprüche, dadurch gekennzeichnet, daß ein erster Schalttransistor (M2) zur Erzeugung eines Sendeimpulses mit einer ersten Polarität und ein zweiter Schalttransistor (M1) zur Erzeugung eines Sendeimpulses mit einer zweiten, dazu entgegengesetzten Polarität vorgesehen ist, wobei der Schaltausgang des zweiten Schaltransistors (M1) mit einem zweiten Ende der Primärwicklung des Ausgangsübertragers verbunden ist.

8. Schaltungsanordnung nach einem der Ansprüche 2 bis 7, gekennzeichnet durch einen zweiten Transistor (Q2) sowie einen zweiten Widerstands-Spannungsteiler (R7, R6, R5), die in gleicher Weise wie der erste Transistor (Q1) und der erste Widerstands-Spannungsteiler (R7, R3, R4) geschaltet sind, wobei der Emitteranschluß des ersten Transistors (Q1) mit dem zweiten Ende der Primärwicklung und der Emitteranschluß des zweiten Transistors (Q2) mit dem ersten Ende der Primärwicklung des Ausgangsübertragers verbunden ist.

9. Schaltungsanordnung nach einem der Ansprüche 1 bis 7, dadurch gekennzeichnet, daß die Primärwicklung des Ausgangsübertragers aus zwei Wicklungshälften gebildet ist, wobei der Mittelabgriff mit dem Emitteranschluß des ersten Transistors (Q1) verbunden ist.

10. Schaltungsanordnung nach Anspruch 9, dadurch gekennzeichnet, daß zwischen dem Emitter und dem Mittelabgriff ein als Diode geschalteter dritter Transistor (Q3) zur Isolierung der Schaltungsanordnung im inaktiven Zustand liegt.
